# EUROPÄISCHE PATENTANMELDUNG

(11) **EP 1 217 226 A2**
(43) Veröffentlichungstag der Anmeldung: **26.06.2002**
(21) Anmeldenummer: 01811195.5
(22) Anmeldetag: 07.12.2001
(51) Int. Cl.: F16B 13/06, F16B 13/12, B29C 45/03

(54) **Formteil und dessen Herstellverfahren**

(30) Priorität: 22.12.2000 DE 10064590
(71) Anmelder: HILTI Aktiengesellschaft, 9494 Schaan (LI)
(72) Erfinder: Wieser, Jürgen, 86916 Kaufering (DE); Bisping, Heinz, 86163 Augsburg (DE); Zimmerer, Claudia, 86153 Augsburg (DE); Scheffler, Peter, 89278 Nersingen-Strass (DE); Daigeler, Erich, 86875 Waal (DE); Kölbl, Alois, 86807 Buchloe (DE)
(74) Vertreter: Wildi, Roland

(57) **Zusammenfassung**

Ein durch ein Spritzgiessen herstellbares Formteil (1) weist eine hohlzylindrischer Form mit zumindest einer umlaufenden Hinterschneidung (4) an der Innenkontur (3) auf. Über einen Grossteil der Längserstreckung erstrecken sich, zur einen Stirnseite hin, offene Längsschlitze (5). Die Hinterschneidung (4) ist in einem Abstand (a) zum offenen Ende der Längsschlitze (5) angeordnet und weist eine, sich zum offenen Ende der Längsschlitze (5) verjüngende, Flanke auf. Zum Herstellen des Formteils wird der Raum zwischen einer Aussenform und einer Kernnadel durch Spritzgiessen verfüllt und nach Entfernen der Aussenform das Formteil mittels eines Abstreifrings von der Kernnadel abgestreift.

## Beschreibung

Die Erfindung betrifft ein durch ein Spritzgiessen herstellbares Formteil, insbesondere zur Anwendung als Befestigungsteil, von im wesentlichen hohlzylindrischer Form, mit zumindest einer umlaufenden Hinterschneidung an der Innenkontur. Ferner ist der Gegenstand der Erfindung ein Verfahren zu dessen Herstellung.

Formteile der genannten Art werden, insbesondere als Bestandteile, für Befestigungsmittel verwendet, beispielsweise als Spreizkörper für sogenannte Kunststoffdübel. Aus wirtschaftlichen Gründen werden diese oft durch Spritzgiessen hergestellt. Selbstverständlich finden derartig ausgebildete Formteile auch in anderen Gebieten Anwendung.

Aus der DE-A1-4004550 ist ein Kunststoffdübel mit einem, durch ein Spreizelement spreizbarer, hohlzylindrischen Spreizkörper bekannt. Als Spreizelement findet überlicherweise eine Schraube Anwendung. Der Spreizkörper weist an seiner Innenkontur Hinterschneidungen auf, die als Innengewinde zur Aufnahme der Schraube dienen. Die als Spreizelement wirkende Schraube spreizt beim Einschrauben in den Spreizkörper diesen. Das bekannte Formteil setzt sich aus zwei Grundkörpern zusammen, wobei die Teilungsebene durch die Zentralachse des Innengewindes verläuft. Nachteilig an derartig zusammengesetzten Formteilen ist beispielsweise, dass das Zusammensetzen der beiden Teile zusätzliche Kosten verursacht.

Ferner ist aus der EP-B1-560517 ein Formteil, insbesondere ein Universaldübel, mit einer im wesentlichen hohlzylindrischer Form und mehreren umlaufenden Hinterschneidungen an der Innenkontur bekannt. Um die Hinterschneidungen in der Innenkontur einzuprägen, weist das Formteil in einem axialen Projektionsbereich mehrere Durchbrüche zum Innenraum des Formteils auf. Während des Herstellverfahrens greifen mehrere Stifte durch die Durchbrüche in den Innenraum hindurch und formen die Hinterschneidung in die Innenkontur des Formteils. Nachteilig an diesem bekannten Formteil ist, dass zu dessen Herstellung äusserst komplizierte und damit teure Werkzeuge notwendig sind.

Der vorliegenden Erfindung liegt die Aufgabe zugrunde, ein durch Spritzgiessen herstellbares Formteil mit einer umlaufenden Hinterschneidung an der Innenkontur zu schaffen. Ferner ist es Aufgabe der Erfindung, ein wirtschaftliches Herstellverfahren für ein solches Formteil anzugeben.

Erfindungsgemäss wird die Aufgabe mit einem Formteil dadurch gelöst, dass wenigstens zwei, sich über einen Grossteil der Längserstreckung zur einen Stirnseite hin offene, Längsschlitze vorgesehen sind, die Hinterschneidung in dem von den Längsschlitzen durchsetzten Längsbereich in einem Abstand zum offenen Ende der Längsschlitze hin angeordnet ist und eine, sich zum offenen Ende der Längsschlitze hin, verjüngende Flanke aufweist.

Dadurch, dass das Formteil derart ausgebildete Längsschlitze aufweist, werden im Bereich der Hinterschneidung radial elastisch ausstellbare Spreizlappen gebildet. Die Spreizlappen ermöglichen es, ein in die Hinterschneidungen greifendes Element an dem die offenen Längsschlitze aufweisenden Ende aus dem Formteil herauszuziehen. Greift jedoch eine Last am gegenüberliegenden Ende am Element an, so wird durch die Hinterschneidung ein Herausgleiten des Elementes verhindert.

Vorteilhafterweise entspricht die Länge der Längsschlitze mindestens dem 5-fachen der Breite derselben, um möglichst wenig Material durch die Schlitzbildung zu verlieren. Insbesondere bei der Anwendung als Spreizdübel bedeutet eine Reduktion der Schlitzbreite eine Erhöhung der Kontaktfläche, was wiederum höhere Lastwerte zur Folge hat.

In einer bevorzugten Ausführung entspricht die Länge der Längsschlitze mindestens dem Innendurchmesser des Formteils, um eine Beanspruchung des Formteils, insbesondere des Werkstoffes, bei einem Ausstellen der Spreizlappen möglichst gering zu halten. Je länger der Längsschlitz ausgebildet ist, desto geringer wird die radiale Auslenkung und desto geringer die Beanspruchung des Werkstoffes, insbesondere im Bereich der Hinterschneidung.

Vorzugsweise entspricht die Länge der Längsschlitze mindestens dem Innendurchmesser des Formteils, um die Beanspruchung des Formteils, insbesondere des Werkstoffes, bei einem Auslenken der ausstellbaren Spreizlappen möglichst gering zu halten.

Vorteilhafterweise entspricht der Abstand der Hinterschneidung vom offenen Ende der Längsschlitze dem 0,25- bis 0,75-fachen der Länge der Längsschlitze, um ein optimales Auslenken der ausstellbaren Spreizlappen sicherzustellen.

Vorzugsweise ist das Formteil aus einem hochfestem Kunststoff, um beispielsweise auch bei hoher Belastung eine genügend hohe Stabilität des Formteils sicherzustellen. Ferner führt die Verwendung eines hochfesten Kunststoffes zu einem optimalen elastischen Verhalten der Spreizlappen.

Das erfindungsgemässe Herstellverfahren besteht darin, dass in einem ersten Schritt vorteilhafterweise der Raum zwischen einer Aussenform und einer, eine Erweiterung für die Hinterschneidung aufweisenden, Kernnadel verfüllt wird und in einem weiteren Schritt nach Entfernen der Aussenform ein, die Kernnadel umgebender, an der durch die offenen Längsschlitze unterbrochenen Stirnseite angreifender Abstreifring derart relativ gegenüber der Kernnadel verschoben wird, dass das Formteil von der Kernnadel abgestreift wird.
Das erfindungsgemässe Verfahren gewährleistet somit eine optimale Herstellung des Formteils. Durch Variieren der Aussenkontur der Kernnadel lassen sich nahezu beliebig viele ausgebildete Hinterschneidungen an der Innenkontur des Formteils herstellen. Durch den Abstreifring ist ein schnelles und zuverlässiges Entfernen des Formteils von der Kernnadel sichergestellt. Die dadurch kurzen Herstellungszyklen führen unter anderem zu äusserst wirtschaftlichen Herstellungskosten der Formteile, was sich insbesondere bei Massenprodukten, wie beispielsweise Befestigungsmitteln, als besonders vorteilhaft erweist. Begünstigt wird dieser Umstand noch dadurch, dass die Hinterschneidung an der Innenkontur nicht in einem separaten Arbeitsgang hergestellt werden muss.

Die Erfindung wird nachstehend anhand eines Ausführungsbeispieles näher erläutert. Es zeigen:
- Fig. 1: einen Querschnitt des erfindungsgemässen Formteils in vergrösserter Darstellung;
- Fig. 2: das in Fig. 1 dargestellte Formteil mit einer eingeführten Kernnadel, vor dem Abstreifen;
- Fig. 3: das in Fig. 1 dargestellte Formteil mit einer eingeführten Kernnadel, nach dem Abstreifen.

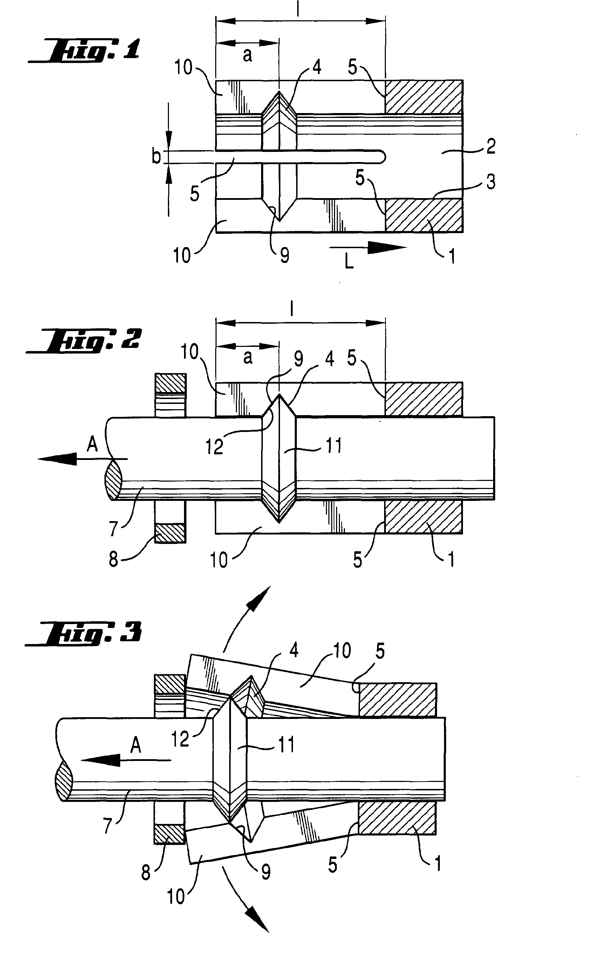

In den Fig. 1 bis 3 ist ein erfindungsgemässes, im wesentlichen hohlzylindrisches Formteil 1, mit einer umlaufenden Hinterschneidung 4 an der Innenkontur 3, dargestellt. Über einen Grossteil der Längserstreckung des Formteils 1 erstrecken sich vier in Längsrichtung (L) verlaufende, zur einen Stirnseite des Formteils 1 hin offen ausgebildete Längsschlitze 5. Zwischen dem radialen Projektionsbereich der beiden Längsenden der Längsschlitze 5 ist die zum offenen Ende der Längsschlitze 5 hin, eine verjüngende Flanke 9 aufweisende Hinterschneidung 5 angeordnet. Die Längsschlitze 5 bilden zusammen mit der Hinterschneidung 4 vier elastisch federnde Spreizlappen 10. Der Abstand a der Hinterschneidung vom offenen Ende der Längsschlitze entspricht dem 0,25- bis 0,75-fachen der Länge I der Längsschlitze. Die Länge I der Längsschlitze 5 entspricht etwa dem 5-fachen der Breite b der Längsschlitze 5.

Das insbesondere in den Fig. 2 und 3 dargestellte Spritzguss-Herstellungsverfahren des erfindungsgemässen Formteils 1 bewirkt in einem ersten Schritt, dass der Raum zwischen einer nicht dargestellten Aussenform und einer, eine Erweiterung für die Hinterschneidung 4 aufweisenden, Kernnadel 7 verfüllt wird. In einem weiteren Schritt nach Entfernen der Aussenform wird ein, die Kernnadel 7 umgebender, an der durch die offenen Längsschlitze 5 unterbrochenen Stirnseite angeordneter Abstreifring 8 derart relativ gegenüber der Kernnadel 7 verschoben, dass das erfindungsgemässe Formteil 1 von der Kernnadel 7 abgestreift wird, wie dies insbesondere in Fig. 3 dargestellt ist. Dabei werden die Spreizlappen 10 im wesentlichen radial nach aussen verschwenkt und geben somit die Kernnadel im Bereich der Hinterschneidung 4 frei. Der Abstreifring 8 dient hierbei als Anschlag für das Formteil 1. Durch die Eigenelastizität der Spreizlappen 10 bewegen sich diese wieder zurück in eine, insbesondere in Fig. 1 dargestellte, Ruheposition.

Die zylinderförmige Kernnadel 7 weist zur Ausbildung der Hinterschneidung 4 an ihrer Aussenkontur eine, im Querschnitt dreieckförmige Erweiterung 11 auf. Durch die Ausbildung der Erweiterung 11 mit einer in einer Ausziehrichtung A fallenden Rampe 12 werden beim Abstreifen des Formteils 1 von der Kernnadel 7 die Spreizlappen 10 nach aussen bewegt und geben somit die Kernnadel 7 frei.

## Patentansprüche

1. Durch ein Spritzgiessen herstellbares Formteil (1), insbesondere zur Anwendung als Befestigungsteil, von im wesentlichen hohlzylindrischer Form, mit zumindest einer umlaufenden Hinterschneidung (4) an der Innenkontur (3), **dadurch gekennzeichnet, dass** wenigstens zwei, sich über einen Grossteil der Längserstreckung zur einen Stirnseite hin offene, Längsschlitze (5) vorgesehen sind, die Hinterschneidung (4) in dem von den Längsschlitzen (5) durchsetzten Längsbereich in einem Abstand (a) zum offenen Ende der Längsschlitze (5) hin angeordnet ist und eine, sich zum offenen Ende der Längsschlitze (5) hin, verjüngende Flanke aufweist.

2. Formteil nach Anspruch 1, **dadurch gekennzeichnet, dass** die Länge (I) der Längsschlitze (5) mindestens dem 5-fachen der Breite (b) derselben entspricht.

3. Formteil nach Anspruch 1 oder 2, **dadurch gekennzeichnet, dass** die Länge (I) der Längsschlitze (5) mindestens dem Innendurchmesser des Formteils (1) entspricht.

4. Formteil nach einem der Ansprüche 1 bis 3, **dadurch gekennzeichnet, dass** der Abstand (a) der Hinterschneidung (4) vom offenen Ende der Längsschlitze (5) dem 0,25- bis 0,75-fachen der Länge (I) der Längsschlitze (5) entspricht.

5. Formteil nach einem der Ansprüche 1 bis 4, **dadurch gekennzeichnet, dass** das Formteil (1) aus einem hochfesten Kunststoff ist.

6. Verfahren zur Herstellung eines Formteils nach einem der Ansprüche 1 bis 5, **dadurch gekennzeichnet, dass** in einem ersten Schritt der Raum zwischen einer Aussenform und einer, eine Erweiterung für die Hinterschneidung (4) aufweisenden, Kernnadel (7) verfüllt wird und in einem weiteren Schritt nach Entfernen der Aussenform ein, die Kernnadel (7) umgebender, an der durch die offenen Längsschlitze (5) unterbrochenen Stirnseite angreifender Abstreifring (8) derart relativ gegenüber der Kernnadel (7) verschoben wird, dass das Formteil (1) von der Kernnadel (7) abgestreift wird.
